# EUROPÄISCHE PATENTSCHRIFT

(11) **EP 2 295 829 B1**
(45) Veröffentlichungstag und Bekanntmachung des Hinweises auf die Patenterteilung: **13.07.2016**
(21) Anmeldenummer: 09011638.5
(22) Anmeldetag: 11.09.2009
(51) Int. Cl.: F16F 15/027

(54) **Verbessertes aktives Schwingungsisolationssystem**
Improved active vibration insulation system
Système d'isolation d'oscillations actif amélioré

(43) Veröffentlichungstag der Anmeldung: 16.03.2011
(73) Patentinhaber: Integrated Dynamics Engineering, 65479 Raunheim (DE)
(72) Erfinder: Heiland, Peter, 65479 Raunheim (DE)
(74) Vertreter: Blumbach Zinngrebe

(56) Entgegenhaltungen:
- EP-A- 0 814 279
- US-A- 6 036 162
- US-A1- 2001 040 324

## Beschreibung

Die vorliegende Erfindung betrifft ein Verfahren zur Regelung eines aktiven Schwingungsisolationssystems und ein aktives Schwingungsisolationssystem, insbesondere zur schwingungsisolierten Lagerung von Lithographie-Geräten, Wafer-Handhabungssystemen und/oder Mikroskopen, wie zum Beispiel Rastermikroskopen.

### Hintergrund der Erfindung

Schwingungsisolationssysteme sind bekannt und werden in vielen Bereichen der Technik, wie zum Beispiel im Bereich der Halbleiterindustrie, benötigt. Beispielsweise zeigt die DE 69817750 T2 ein Schwingungsisolationssystem, welches insbesondere zur schwingungsisolierten Lagerung eines Lithographie-Geräts vorgesehen ist. Dort wird eine schwingungsisoliert zu lagernde Last, die typischerweise einen Tisch und auf dem Tisch gelagerte Bauelemente, wie zum Beispiel Fertigungsanlagen, umfasst, auf Luftlagern gelagert. Der Tisch wird auch als Basismasse bezeichnet.

Ein weiteres Schwingungsisolationssystem ist aus der EP 0 814 279 A2 bekannt.

Ein passives Schwingungsisolationssystem ist gekennzeichnet durch eine "einfache" Lagerung mit möglichst geringer mechanischer Steifigkeit, um die Übertragung von externen Schwingungen auf die zu isolierende Last zu reduzieren. Ein Luftlager und ein Polymer-Federelement zum Lagern sind zwei Beispiele für ein passives Schwingungsisolationssystem.

Gegenüber einer passiven Schwingungsisolation, die durch eine Art Dämpfung der Schwingung oder eine Art "isolierte" Lagerung der Last gekennzeichnet ist, ist eine aktive Schwingungsisolation dadurch gekennzeichnet, dass die Schwingung aktiv kompensiert wird. Eine Bewegung, welche durch eine Schwingung induziert wird, wird durch eine entsprechende Gegenbewegung kompensiert. Zum Beispiel wird einer durch eine Schwingung induzierten Beschleunigung der Masse eine dem Betrag nach gleich große Beschleunigung, jedoch mit entgegengesetzten Vorzeichen entgegengesetzt. Die resultierende Gesamtbeschleunigung der Last ist gleich Null. Die Last verharrt in Ruhe bzw. der gewünschten Lage.

Aktive Schwingungsisolationssysteme weisen daher, optional zusammen mit einer Lagerung mit möglichst mechanisch geringer Steifigkeit, zusätzlich ein Regelsystem auf, das eine Regeleinrichtung sowie Sensoren und Aktoren umfasst, mit denen gezielt von außen in das System eindringenden Schwingungen entgegengewirkt wird. Die Sensoren erfassen Bewegungen der zu lagernden Last. Über die Regeleinrichtung werden Kompensationssignale generiert, mit welchen die Aktoren angesteuert und so Kompensationsbewegungen generiert werden. Dabei gibt es die Möglichkeit, digitale oder analoge Regelungsstrecken zu verwenden oder aber auch beide zusammen, sogenannte hybride Regelungsstrecken.

Im Allgemeinen werden pro System und insbesondere pro zu lagernde Basismasse bis zu vier Luftlager, welche auch als pneumatische Isolatoren oder Schwingungsisolatoren bezeichnet werden, eingesetzt. Jeder der Isolatoren wird jeweils "alleine" nur zur Höhenregelung eingesetzt. Daher werden wegen der Überbestimmtheit nur drei davon mit einem, insbesondere steuerbaren, Ventil ausgerüstet. Denn eine Ebene, hier die horizontale Ebene, ist bereits eindeutig durch drei Auflagepunkte definiert. Der vierte Isolator wird passiv von einem der drei anderen Ventile mitversorgt (sogenannte "master-slave-Konfiguration"). Damit werden dann nur jeweils drei der vier Isolatoren wirklich mittels einer Regelung erfasst, der vierte bleibt passiv.

Die Anforderungen an Schwingungsisolationssysteme nehmen, insbesondere in der Halbleiterindustrie, immer weiter zu. Beispielsweise werden auf der Basismasse verfahrbare oder beweglich angeordnete Tische, sogenannte "stages", zum Transport von Wafern, verwendet. Diese erzeugen durch ihre Bewegung auf der Basismasse Schwingungen in dem System selbst, sogenannte "intrinsische" Schwingungen. Daher ist es erforderlich, die durch die Bewegung einer "Stage" erzeugten Schwingungen effektiv zu kompensieren. Es werden hohe Anforderungen an ein System zur Schwingungsisolation oder Schwingungskompensation gestellt, da die "Stages" zum Teil ein recht großes Gewicht besitzen. Insbesondere das "dauerhafte" Bereitstellen der erforderlichen Kraft durch die verwendeten Aktoren erweist sich als problematisch.

Die Dokumente EP 0 814 279 A und US 2001/040324 A1 zeigen aktive Schwingungsisolationssysteme mit einer Kombination aus Luftlagern, elektromagnetischen Aktoren, Positionssensoren und Beschleunigungssensoren. Das Dokument US 6 036 162 A zeigt ein aktives Schwingungsisolationssystem, bei welchem zum Regeln der Schwingungsisolation nur die Signale der Beschleunigungssensoren eingesetzt werden.

### Allgemeine Beschreibung der Erfindung

Vor diesem Hintergrund hat sich die vorliegende Erfindung zur Aufgabe gestellt, eine System und ein Verfahren zur aktiven Schwingungsisolation bereitzustellen, welche die vorstehend beschriebenen Nachteile des Standes der Technik zumindest vermindern.

Dabei soll es insbesondere möglich sein, die Erfindung in bereits bestehende Regelungskonzepte integrieren zu können bzw. die bekannten Regelungskonzepte erweitern zu können.

Gelöst werden die genannten Aufgaben durch ein aktives Schwingungsisolationssystem und ein Verfahren zur Regelung eines aktiven Schwingungsisolationssystems gemäß den unabhängigen Ansprüchen.

Vorteilhafte Ausführungsformen sind Gegenstand der jeweiligen Unteransprüche.

Zunächst betrifft die vorliegende Anmeldung ein aktives Schwingungsisolationssystem umfassend
a) eine Basismasse zum Lagern einer zu isolierenden Last,
b) insbesondere pneumatische, Schwingungsisolatoren mit, vorzugsweise regelbaren, Ventilen zum Stützen der Basismasse gegenüber einer Unterlage,
c) Positionssensoren zum Liefern von, vorzugsweise vertikalen, Positionssignalen der Basismasse,
d) ein erstes Regelsystem zur Schwingungskompensation in zumindest einem Freiheitsgrad der Translation Xt, Yt und/oder Zt und zumindest einem Freiheitsgrad der Rotation Xr, Yr und/oder Zr mit wenigstens
   d1) ersten Sensoren zum Liefern von Schwingungen repräsentierenden ersten Sensorsignalen,
   d2) ersten Aktoren zur Schwingungskompensation, die durch Zuführen von ersten Aktor-Stellsignalen ansteuerbar sind, und
   d3) einer ersten Regeleinrichtung, welche zum Verarbeiten der gelieferten ersten Sensorsignale in die ersten Aktor-Stellsignale ausgebildet ist, und
e) ein zweites, vorzugsweise pneumatisches, Regelsystem zur Schwingungskompensation in wenigstens einem von drei vertikal wirksamen Freiheitsgraden Zt, Xr und/oder Yr zumindest aus
   e1) den Positionssensoren als zweite Sensoren zum Liefern von Schwingungen repräsentierenden zweiten Sensorsignalen,
   e2) den, insbesondere pneumatischen, Schwingungsisolatoren, vorzugsweise mit den Ventilen, als zweite Aktoren zur Schwingungskompensation, die durch Zuführen von zweiten Aktor-Stellsignalen ansteuerbar sind und
   e3) einer zweiten Regeleinrichtung, welche zum Verarbeiten der gelieferten Positionssignale in die zweiten Aktor-Stellsignale ausgebildet ist.

Im Allgemeinen ist das erste Regelsystem mit dem zweiten Regelsystem gekoppelt. In einer ersten Ausführungsform sind Mittel zum Zusammenführen der ersten Aktor-Stellsignale, die in wenigstens einer der drei vertikalen Freiheitsgrade Zt, Xr und/oder Yr wirksam sind, mit den in dem entsprechenden Freiheitsgrad wirksamen zweiten Aktor-Stellsignalen vorgesehen. Die Mittel zum Zusammenführen sind in einer bevorzugten Ausgestaltung der Erfindung als eine Schaltung ausgeführt. Diese kann als eine analoge und/oder eine digitale Schaltung ausgeführt sein.

Weiterhin liegt im Rahmen der Erfindung auch ein Verfahren zur Regelung eines mit einer Basismasse zur Lagerung einer zu isolierenden Last ausgestatteten aktiven Schwingungsisolationssystems. Das Verfahren umfasst unter anderem die folgenden Verfahrensschritte:
- Erfassen von Schwingungen zumindest der Basismasse und/oder einer zu isolierenden Last mittels einer Vielzahl von ersten Sensoren,
- Erfassen von, insbesondere vertikalen, Positionen der Basismasse mittels einer Vielzahl von Positionssensoren als zweite Sensoren,
- Bereitstellen von ersten Sensorsignalen, welche die erfassten Schwingungen repräsentieren, und von zweiten Sensorsignalen, welche die erfassten, insbesondere vertikalen, Positionen repräsentieren,
- Verarbeiten der bereitgestellten ersten und zweiten Sensorsignale zu ersten Aktor-Stellsignalen zum Ansteuern von ersten Aktoren und zu zweiten Aktor-Stellsignalen zum Ansteuern von zweiten Aktoren, welche als, vorzugsweise pneumatische, Schwingungsisolatoren zum Stützen der Basismasse gegenüber einer Unterlage bereitgestellt werden,
- Zuführen der ersten und zweiten Aktor-Stellsignale zu den ersten und zweiten Aktoren zum Entgegenwirken der Schwingungen.

Das erfindungsgemäße Verfahren ist insbesondere ausführbar mittels des erfindungsgemäßen Systems. Das erfindungsgemäße System ist insbesondere ausgebildet zur Ausführung des erfindungsgemäßen Verfahrens.

Unter einer Schwingungskompensation wird verstanden, dass den störenden Bewegungen oder Schwingungen, die au das System einwirken, entgegengewirkt werden soll. Im Idealfall wird die Bewegung oder die Schwingung kompensiert. Dies erfolgt vorzugsweise in allen sechs Freiheitsgraden der Bewegung.

Die sechs Freiheitsgrade sind die drei Freiheitsgraden der Translation Xt, Yt und Zt und die drei Freiheitsgrade der Rotation Xr, Yr und Zr. Die Koordinaten X und Y definieren hierbei die horizontale Ebene und die Koordinate Z die Vertikale dazu. Im Allgemeinen wird die horizontale Ebene durch die Basismasse definiert.

Die vorstehend genannten vertikal wirksamen Freiheitsgrade sind
- der Freiheitsgrad der Translation in vertikaler Richtung Zt, beispielsweise zum Festlegen einer Höhenveränderung der Basismasse,
- der Freiheitsgrad der Rotation in horizontaler Richtung Xr, beispielsweise zum Festlegen einer Kippbewegung der Basismasse in der horizontalen Ebene und
- der Freiheitsgrad der Rotation in horizontaler Richtung Yr, beispielsweise zum Festlegen einer Kippbewegung der Basismasse in der horizontalen Ebene senkrecht zu Xr.

Sofern dies nicht explizit ausgeführt sein sollte, beziehen sich die nachfolgenden Beschreibungen sowohl auf das erste als auch auf das zweite Regelsystem, den ersten und den zweiten Sensor, den ersten und den zweiten Aktor, ....

Die Sensoren erfassen, mittelbar und/oder unmittelbar, eine Massenbewegungen der Basismasse und/oder der Last. Diese Massenbewegung ist dabei vorzugsweise eine Schwingung. Die Massenbewegung ist über eine Beschleunigung, eine Geschwindigkeit und/oder eine Positionsveränderung der Basismasse und/oder der Last charakterisiert. Zum Beispiel ist die Position der Basismasse abhängig von den auf sie einwirkenden Schwingungen.

Der Sensor kann ein Sensor sein, der geeignet ist, nur die Schwingungen oder eine Störgröße in einem Freiheitsgrad zu erfassen. Der Sensor kann aber auch ein Sensor sein, der geeignet ist, die Schwingungen oder eine Störgröße in einer Vielzahl von Freiheitsgraden zu erfassen. Beispiele für die Sensoren sind Geophonsensoren und/oder piezo-elektrische Sensoren. Die Aufzählung ist jedoch nur beispielhaft und nicht abschließend.

Die Positionssensoren, insbesondere zum Liefern der vertikalen Positionssignale, liefern eine Information über eine Position und/oder eine Positionsänderung, vorzugsweise der Basismasse. Das kann unmittelbar oder mittelbar erfolgen. Bevorzugt wird hierbei die Position, wie zum Beispiel die Höhe, als solches und somit unmittelbar geliefert. Die Positionssensoren, insbesondere zum Liefern der vertikalen Positionssignale, können auch noch weitere Funktionen aufweisen. Sie können zusätzlich auch noch die Beschleunigung und/oder die Geschwindigkeit erfassen.

Die Sensorsignale können analoge und/oder digitale Signale sein. Ein Sensorsignal kann ein Signal sein, welches nur die Schwingungen oder eine Störgröße in einem Freiheitsgrad erfasst. Das Sensorsignal kann aber auch ein Signal sein, das die Schwingungen oder eine Störgröße in einer Vielzahl von Freiheitsgraden erfasst.

Die Aktor-Stellsignale können analoge und/oder digitale Signale sein. Ein Aktor-Stellsignal stellt eine Art Kompensationssignal dar. Eine Schwingung einer zu lagernden Last wird aktiv kompensiert. Die Aktoren können in einem Freiheitsgrad oder in einer Mehrzahl von Freiheitsgraden der Bewegung wirksam sein. Ein Aktor-Stellsignal kann daher ein Signal sein, das Informationen für nur einen Freiheitsgrad beinhaltet. Es kann aber auch ein Signal sein, das Informationen für eine Vielzahl von Freiheitsgraden beinhaltet. Beispiele für die Aktoren umfassen Lorentzmotoren, wie zum Beispiel Tauchspulen, und/oder piezo-elektrische Aktoren. Die Aufzählung ist jedoch nur beispielhaft und nicht abschließend.

Die Aktoren weisen einen Wirkungsbereich auf. Der jeweilige Wirkungsbereich ist definiert zum Beispiel durch die Größe, die Richtung und/oder die Frequenz des Aktor-Stellsignals. Die pneumatischen Schwingungsisolatoren als zweite Aktoren besitzen eine Kraftwirkung in den drei vertikal wirksamen Freiheitsgraden Zt, Xr und Yr.

Ebenso kann die Regeleinrichtung eine digital und/oder eine analog arbeitende Regeleinrichtung sein.

In einer Ausgestaltung der Erfindung wird ein erstes bzw. das erste Regelsystem zur Schwingungskompensation in zumindest einem Freiheitsgrad der Translation Xt, Yt und/oder Zt und/oder in zumindest einem Freiheitsgrad der Rotation Xr, Yr und/oder Zr bereitgestellt. D.h. das erste Regelsystem ist in den genannten Freiheitsgraden wirksam. Vorzugsweise ist das erste Regelsystem in allen drei Freiheitsgrade der Translation Xt, Yt und Zt und in allen drei Freiheitsgraden der Rotation Xr, Yr und Zr wirksam.

In einer Ausgestaltung wird das erste Regelsystem zumindest durch die ersten Sensoren, die ersten Aktoren und eine erste Regeleinrichtung, welche zum Verarbeiten der ersten Sensorsignale in die ersten Aktor-Stellsignale ausgebildet ist, bereitgestellt. Die ersten Sensoren sind ausgebildet zur Erfassung von Schwingungen in zumindest einem Freiheitsgrad der Translation Xt, Yt und/oder Zt und/oder in zumindest einem Freiheitsgrad der Rotation Xr, Yr und/oder Zr. Vorzugsweise sind die ersten Sensoren in allen drei Freiheitsgrade der Translation Xt, Yt und Zt und in allen drei Freiheitsgraden der Rotation Xr, Yr und Zr wirksam. Die ersten Aktoren zur Schwingungskompensation sind in zumindest einem Freiheitsgrad der Translation Xt, Yt und/oder Zt und/oder in zumindest einem Freiheitsgrad der Rotation Xr, Yr und/oder Zr wirksam. Vorzugsweise sind die ersten Aktoren in allen drei Freiheitsgrade der Translation Xt, Yt und Zt und in allen drei Freiheitsgraden der Rotation Xr, Yr und Zr wirksam.

In einer weiteren Ausführung der Erfindung wird ein zweites bzw. das zweite Regelsystem zur Schwingungskompensation in zumindest einem von drei vertikal wirksamen Freiheitsgraden Zt, Xr und/oder Yr bereitgestellt. Das zweite Regelsystem ist in den genannten Freiheitsgraden wirksam. Vorzugsweise ist das zweite Regelsystem in allen drei vertikal wirksamen Freiheitsgraden Zt, Xr und Yr wirksam.

In einer bevorzugten Ausführungsform wird das zweite Regelsystem zumindest durch die zweiten Sensoren, die zweiten Aktoren und eine zweite Regeleinrichtung, welche zum Verarbeiten der zweiten Sensorsignale in die zweiten Aktor-Stellsignale ausgebildet ist, bereitgestellt. Da die zweiten Aktoren insbesondere durch die vorstehend genannten pneumatischen Schwingungsisolatoren bereitgestellt werden, wird das zweite Regelsystem nachfolgend auch als pneumatisches System oder Subsystem bezeichnet.

Das erste Regelsystem und das zweite Regelsystem können auch in einem einzigen Regelsystem bereitgestellt werden. In diesem einen Regelsystem können das erste und das zweite Regelsystem beispielsweise durch entsprechende Routinen zur Datenverarbeitung und/oder durch entsprechende Schaltungen bereitgestellt werden.

Vorzugsweise erfolgt die Schwingungskompensation in dem zumindest einen vertikal wirksamen Freiheitsgrad der Translation Zt und den zumindest zwei vertikal wirksamen Freiheitsgraden der Rotation Xr und Yr durch das erste Regelsystem und/oder das zweite Regelsystem.

Gemäß der Erfindung wird wenigstens von dem ersten Regelsystem eine Abzweigung zu dem zweiten Regelsystem bereitgestellt.

Die Abzweigung oder ein Zusammenführen des ersten und des zweiten Regelsystems ist derart, dass das erste und das zweite Regelsystem derart gekoppelt sind, dass diese in zumindest einem Freiheitsgrad zusammenwirken.

Insbesondere macht das erste Regelsystem dabei von einer Kraftwirkung in wenigstens einer der drei vertikal wirksamen Freiheitsgrade Xr, Yr und/oder Zt komplett oder anteilig Gebrauch.

In einer erfindungsgemäßen Variante werden die ersten und die zweiten Aktor-Stellsignale zur Schwingungskompensation in dem zumindest einem Freiheitsgrad der Translation Zt und den zumindest zwei Freiheitsgraden der Rotation Xr und Yr nach Anteilen aufgeteilt. Vorzugsweise erfolgt hierbei das Aufteilen nach einstellbaren Anteilen.

Weiterhin ist die Erfindung in einer Ausgestaltung dadurch gekennzeichnet, dass die ersten und/oder die zweiten Aktor-Stellsignale, die in dem Freiheitsgrad der vertikalen Translation Zt und/oder den zwei Freiheitsgraden der vertikalen Rotation Xr und Yr, wirksam sind, in Abhängigkeit von einer Amplitude und/oder in Abhängigkeit von einer Frequenz der entgegenzuwirkenden Schwingungen nach Anteilen aufgeteilt wird bzw. werden. Beispielsweise werden bei Schwingungen mit großen Amplituden, die einen entsprechend großen Hub zur Kompensation erfordern, die zweite Aktoren, hier im Wesentlichen die pneumatischen Schwingungsisolatoren, eingesetzt.

In einer Variante der Erfindung wird den zweiten Aktor-Stellsignalen ein gegenüber den ersten Aktor-Stellsignalen tieffrequenter Bereich zur Schwingungskompensation zugeordnet wird. Vorzugsweise werden die zweiten Aktor-Stellsignale in einem Frequenzbereich von bis zu etwa 30 Hz, bevorzugt von bis zu etwa 10 Hz, besonders bevorzugt von bis zu etwa 5 Hz, zur Schwingungskompensation bereitgestellt. Dazu ist insbesondere eine Hochpass-/Tiefpass-Filterkombination zwischen dem ersten Regelsystem und dem zweiten Regelsystem angeordnet oder geschaltet, so dass den zweiten Aktor-Stellsignalen die ersten Aktor-Stellsignale zugeführt werden, die in dem tieffrequenten Bereich liegen.

Jedes Regelungssystem innerhalb der Regelung, welches eine Kraftwirkung in wenigstens einem der drei vertikal wirksamen Freiheitsgrade benötigt, kann komplett oder anteilig, insbesondere über eine HP/TP-Kombination, vom pneumatischen Subsystem Gebrauch machen.

In einer Ausgestaltung der Erfindung werden die ersten Sensorsignale, vorzugsweise ausschließlich, zu den ersten Aktor-Stellsignalen verarbeitet und/oder die ersten Aktor-Stellsignale, vorzugsweise ausschließlich, den ersten Aktoren zugeführt.

In einer alternativen oder ergänzenden Ausgestaltung werden die zweiten Sensorsignale, vorzugsweise ausschließlich, zu den zweiten Aktor-Stellsignalen verarbeitet und/oder die zweiten Aktor-Stellsignale, vorzugsweise ausschließlich, den zweiten Aktoren zugeführt.

In einer bevorzugten Ausgestaltung werden die ersten Sensoren als Beschleunigungssensoren und/oder die ersten Aktoren als Lorentzmotoren bereitgestellt.

In einer Weiterbildung der Erfindung werden die ersten Aktor-Stellsignale, welche in wenigstens einem der drei vertikalen Freiheitsgrade Zt, Xr und/oder Yr wirksam sind, mit den in dem entsprechenden Freiheitsgrad wirksamen zweiten Aktor-Stellsignalen zusammengeführt. Beispielsweise wird das erste Aktor-Stellsignal, das in dem Freiheitsgrad Zt wirksam ist, mit dem zweiten Aktor-Stellsignale, das ebenso in dem Freiheitsgrade Zt wirksam ist, zusammengeführt.

Eine weitere Ausführungsform der Erfindung ist dadurch gekennzeichnet, dass die ersten Aktor-Stellsignale frequenzabhängig gefiltert werden und gefilterte erste Aktor-Stellsignale in einem tieffrequenten Bereich den zweiten Aktoren und gefilterte erste Aktor-Stellsignale in einem höherfrequenter Teil den ersten Aktoren zugeführt werden.

Allgemeinem wird die Erfindung beschrieben durch ein Schwingungsisolationssystem mit pneumatischen Isolatoren, die nicht nur zur Positionslagerung sondern auch zur Schwingungs- oder Kraftkompensation verwendet werden. Durch die Verwendung des pneumatischen Systems als ein zusätzliches Kraftaktor-System lassen sich höhere Kräfte zur Kompensation erzeugen. Zudem kann die Abwärme, zum Beispiel durch hohe Ströme der Lorentzmotoren, die oft als erste Aktoren eingesetzt werden, reduziert oder minimiert werden.

Ein der Erfindung zugrunde liegendes Prinzip der Regelung basiert darauf, das pneumatische System, insbesondere analog zur Regelung der restlichen Regelungssysteme, wie des ersten Regelsystems, über eine "Sensor-Input-Steering-Matrix" und/oder eine "Aktor-Output-Steering-Matrix" zu betreiben, welche Sensor-Einzelsignale bzw. Aktor-Einzelsignale in Freiheitsgrade umrechnet bzw. umrechnen.

Dies ermöglicht, in einem Schwingungsisolationssystem alle aktiv geregelten pneumatischen Isolatoren einzusetzen. In einer bevorzugten Ausgestaltung der Erfindung werden vier, wie statt wie bisher nur drei, aktiv geregelte oder regelbare pneumatische Isolatoren innerhalb des Systems eingesetzt.

Vorzugsweise werden alle Isolatoren des Systems, die insbesondere alle jeweils ein steuerbares Ventilsystem umfassen, in der Regelung verwendet. Beispielsweise kommen bei einem System mit vier Isolatoren nicht nur drei steuerbare Ventile sondern vier steuerbare Ventile zum Einsatz, ohne dass es durch eine Überbestimmtheit zu Problemen in der Regelung kommt.

In einer konkreten Ausgestaltung der Erfindung ist ein Schwingungsisolationssystem vorgesehen, bei dem das pneumatische Subsystem aus vier Isolatoren mit jeweils dazugehörigen aktiv regelbaren Ventilen gebildet wird. Das pneumatische Subsystem wird in den Freiheitsgraden, in denen es wirksam ist, angesprochen und geregelt. Dabei kann die Regelung vom Kraftwirkungspotenzial der pneumatischen Isolatoren Gebrauch machen, indem über erfindungsgemäße Verschaltungen und/oder Routinen die unterschiedlichen Regelungssubsysteme, wie zum Beispiel das erste Regelsystem, ihre Stellsignale zumindest teilweise auch auf das pneumatische Subsystem, hier zum Beispiel ausgeführt als das zweite Regelsystem, leiten. Dabei kann in einer Variante der Erfindung sogar jedes Regelungssystem innerhalb der Regelung, welches eine Kraftwirkung in einer der drei vertikal wirksamen Freiheitsgrade benötigt, komplett oder anteilig, insbesondere auch über eine Hochpass/Tiefpass-Kombination (HP/TP-Kombination), vom pneumatischen Subsystem Gebrauch machen.

Jede Art der Regelung ist darauf angewiesen, Informationen oder Daten zu erhalten, die es erlauben, die Bewegung einer zu isolierenden Anordnung zu erfassen und durch ein Berechnen und/oder Bereitstellen einer Art Gegenbewegung, die Anordnung in einem Ruhezustand zu belassen oder in einen bewegungs- oder schwingungsarmen Zustand zurückzuversetzen.

In einer Ausführungsform der Erfindung basiert die Regelung, insbesondere des ersten und/oder zweiten Regelsystems, auf einer sogenannten Rückkopplungsregelung ("feedback"). In einer Rückkopplungsregelung ist die Regelung darauf angewiesen, Sensorsignale zu bekommen, die proportional zur Bewegung, insbesondere Beschleunigung, einer zu isolierenden Masse sind.

Aus den Sensorsignalen werden in dem Regelsystem oder in der Regeleinrichtung Kompensationssignale, die genannten Aktor-Stellsignale, erzeugt, die zum Ansteuern von Aktoren verwendet werden, um beispielsweise eine Masse vom sich bewegenden Boden zu isolieren oder allgemein Massenbewegungen zu reduzieren. Das Regelsystem oder die Regeleinrichtung errechnet aus den Sensorsignalen der Sensoren Kompensationssignale zur Ansteuerung der Aktoren.

In einer alternativen oder ergänzenden Ausführungsform der Erfindung basiert die Regelung, insbesondere des ersten und/oder zweiten Regelsystems, auf einer sogenannten Vorwärtsregelung ("feed forward"). In der Vorwärtsregelung ist die Regelung darauf angewiesen, Sensorsignale zu bekommen, die auf die Beschleunigung schließen lassen. Die durch Bewegungen von Bauteilen induzierten Kräfte werden sozusagen vorweggenommen.

Dies wird am Beispiel der "Stage" erläutert. Die Bewegung der "Stage" wirkt auf den Gesamtzustand des Systems ein. Diese Einwirkung kann mit einer Übertragungsfunktion für Schwingungen oder einer Übertragungscharakteristik auf das System beschrieben werden. Für jede Bewegung der "Stage" und/oder jede Position der "Stage" auf der Basismasse existiert eine zugeordnete Übertragungsfunktion, die vorab in einem Speicher einer Feedforwardregelung hinterlegt werden, um zu einer "passenden" Gelegenheiten zur Verfügung zu stehen.

Im Betrieb des Systems werden die von der "Stage" an die Feedforwardregelung gesendeten Daten zum Bewegungszustand und/oder zur Position von der Feedforwardregelung mit der jeweils zutreffenden Übertragungsfunktion gefaltet. Das Ergebnis dieser Faltung wird von der Feedforwardregelung als Aktor-Stellsignal an die Aktoren gesendet. Die Aktoren werden hierdurch derart beeinflusst, dass die Auswirkungen der Bewegungen der "Stage" auf den Schwingungszustand des Gesamtsystems minimiert werden. Auf diese Weise werden im Ergebnis die durch die Bewegungen der "Stage" induzierten Kräfte vorweggenommen. Das erlaubt, die gesamte Anordnung schnell in einen schwingungsarmen Zustand zu versetzen bzw. sie in einem schwingungsarmen Zustand zu erhalten.

Die vorliegende Erfindung wird anhand der nachfolgenden Ausführungsbeispiele im Einzelnen erläutert. Hierzu wird auf die beiliegenden Zeichnungen Bezug genommen. Die gleichen Bezugszeichen in den einzelnen Zeichnungen beziehen sich auf die gleichen Teile.
Fig. 1 zeigt schematisch ein beispielhaftes aktives Schwingungsisolationssystem.
Fig. 2 zeigt schematisch ein exemplarisches Regelungssystem mit einer Vielzahl an Sensoren, Steeringmatrizen und einer Vielzahl an Motoren.
Fig. 3 zeigt schematisch eine exemplarische Regelung in einem pneumatischen Subsystem mit Steeringmatrizen.
Fig. 4. zeigt schematisch eine erste beispielhafte Kopplung eines Regelsystems mit einer Regelung in einem pneumatischen Subsystem.
Fig. 5. zeigt schematisch eine weitere exemplarische erfindungsgemäße Kopplung eines Regelsystems mit einer Regelung in einem pneumatischen Subsystem.

### Detaillierte Beschreibung der Erfindung

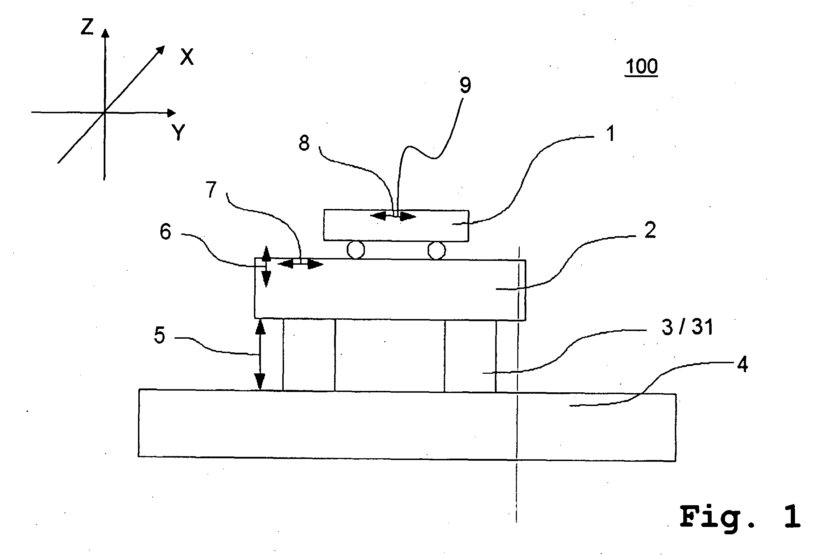

Figur 1 zeigt ein Schwingungsisolationssystem 100 auf Basis pneumatischer Isolatoren 3. Eine zu isolierende Masse 2 ist mittels pneumatischer Isolatoren 3 schwingungsisoliert oder isoliert von einem Boden 4 gelagert. Auf der Masse 2 selbst ist ein verfahrbarer Tisch 1, insbesondere zum Transport von Wafern, Lithographie-Geräten, Wafer-Handhabungssystemen und/oder Mikroskopen, angeordnet.

Zur aktiven Schwingungsisolation umfasst das System 100 in einer Ausgestaltungsform vier pneumatische Isolatoren 3, eine Vielzahl von Aktoren und eine Vielzahl von Sensoren 5, 6, 7, 8, und 9 als Schwingungssignalgeber. Über die Sensoren 6, 7, 8, und 9 können Schwingungen oder allgemein Bewegungen der Basismasse 2 und der zu isolierenden Last 1 erfasst, in Signale umgewandelt und an ein Regelsystem, wie das erste Regelsystem 10, weitergegeben werden. Die Sensoren 5, 6, 7, 8, und 9 als Schwingungssignalgeber liefern somit die Schwingungen repräsentierende Sensorsignale.

Aus Gründen einer verbesserten Übersicht sind in der Figur nur ein Teil der Komponenten und darüber hinaus, neben dem Isolator 3 und den Ventilen 31, keine weiteren Kraftaktoren eingezeichnet. Die Sensoren sind in dem dargestellten Beispiel nur für zwei Freiheitsgrade der Translation Yt und Zt dargestellt.

Die Sensoren sind beispielsweise Geschwindigkeitssensoren, Beschleunigungssensoren oder/und Positionssensoren. Als ein Beispiel sind in der Figur 1 ein Positionssensor 5 und ein Geschwindigkeits- und/oder Beschleunigungssensor in vertikaler Richtung 6 und in horizontaler Richtung 7 sowie an dem fahrbaren Tisch 1 ein Beschleunigungssensor 8 und ein Positionssensor 9 illustriert.

Die Aktoren sind vorzugsweise Aktoren mit horizontaler und/oder vertikaler Wirkrichtung. Dabei sind die Aktoren im Allgemeinen konventionelle Kraftaktoren. Beispiele für die Kraftaktoren oder Aktoren stellen Lorentzmotoren und/oder Piezoaktoren usw. dar. Die Aktoren sind im Allgemeinen in räumlicher Nähe zu den Sensoren positioniert. In einer Ausführungsform ist jedem Sensor ein Aktor zugeordnet.

Die pneumatischen Isolatoren 3 sind, insbesondere jeweils, mit einem, vorzugsweise elektronisch, steuerbaren Ventil 31 ausgestattet. Ein pneumatischer Isolator 3 bildet zusammen mit dem Ventil 31 einen Aktor mit vertikaler Wirkrichtung.

Die horizontale Richtung oder Ebene wird durch die Achsen X und Y und die vertikale Richtung durch die Achse Z des in Figur 1 gezeigten Koordinatensystems illustriert. Die Achsen X und Z liegen in der Blattebene und die Achse Y senkrecht zur Blattebene.

Die Sensoren 5, 6, 7, 8, und 9 liefern Eingangssignale, wie erste und zweite Sensorsignale, für die Regelungssysteme 10 und 20, insbesondere die Regeleinrichtungen 12 und 22. Die Eingangssignale können vorzugsweise Geschwindigkeits-, Beschleunigungs- und/oder Positionssignale sein.

In einem Regelungssystem oder einer Regeleinrichtung werden die Sensorsignale in einer besonderen Art und Weise so zu Aktor-Stellsignalen verrechnet, dass die Schwingungen einer gelagerten Masse 2 reduziert oder minimiert werden und das obwohl sich verfahrbare Tische 1 (sogenannte "Stages" 1) auf ihr bewegen können.

Erfindungsgemäß macht das Regelungssystem in besonderer und allgemeiner Weise von den pneumatischen Aktuatoren 3, 31 als, vorzugsweise zusätzliche, Kraftaktoren Gebrauch. Es wird in einer solchen Art Gebrauch gemacht, dass die Überbestimmtheit keine Regelinstabilität verursacht. Denn bei vier unabhängig voneinander auf die Ventile 31 arbeitenden Regelschleifen, käme es wegen der Überbestimmtheit des Systems zu einem "Aufschaukeln".

Damit auch andere, parallel ablaufende Regelsysteme der Regelung, wie zum Beispiel das erste Regelsystem 10, von der Kraftwirkung der pneumatischen Isolatoren 31 profitieren können, erfolgt erfindungsgemäß eine Neustrukturierung der Regelung des pneumatischen Subsystems als zweitem Regelsystem 20, um eine Regelinstabilität zu vermeiden und gleichzeitig eine möglichst gute Kraftwirkung zu erzielen.

Dazu wird analog zur Strukturierung der im Allgemeinen zahlenmäßig ebenfalls überbestimmten Kraftaktoren im Regelsystem, wie dem ersten Regelsystem 10, nun auch im pneumatischen Regelsystem als dem zweiten Regelsystem 20 eine Steeringmatrix eingeführt.

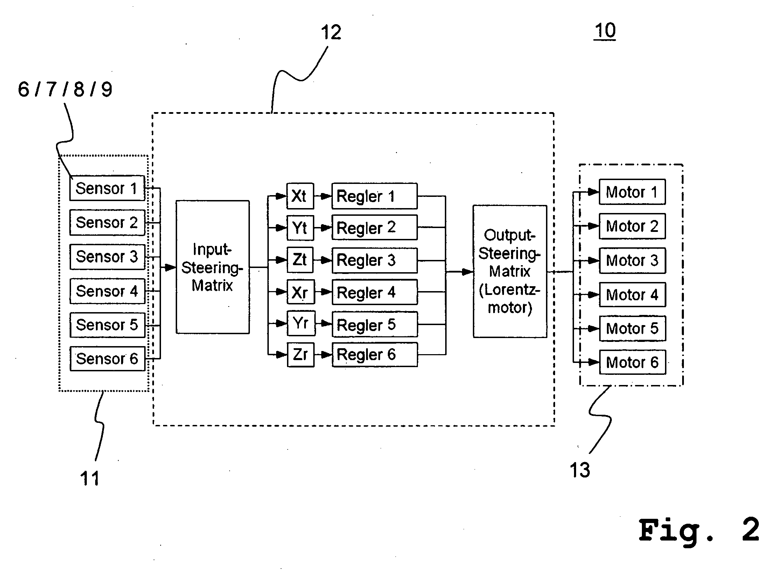

In Figur 2 ist ein erstes Regelungssystem 10 mit ersten Sensoren 11, einer ersten Regeleinrichtung 12 und ersten Aktoren 13 illustriert. Als Beispiel sind die Sensoren 1 bis 6 gezeigt. Diese sind der Basismasse 2 und/oder dem Tisch 1 zugeordnet. Sie erfassen die Schwingungen der Basismasse 2 und/oder des Tisches 1. Vorzugsweise werden sowohl die Schwingungen in den drei Freiheitsgraden der Translation Xt, Yt und Zt als auch in den drei Freiheitsgraden der Rotation Xt, Yr und Zr erfasst.

Die ersten Sensoren 11 sind im Allgemeinen an unterschiedlichen Positionen angebracht, um die gesamte Bewegung oder alle Raumrichtung erfassen zu können. Die ersten Sensoren 11 können dabei nur in einem Freiheitsgrad oder auch in mehreren Freiheitsgraden sensitiv sein. Sind Sensoren nur in einer Raumrichtung wirksam, können über eine entsprechende Ausrichtung der Sensoren im Raum und über eine vektorielle Addition der erfassten "Kräfte" alle Raumrichtungen erfasst werden.

Um die Bewegung oder Schwingung der Masse und schließlich die erforderliche Kompensation bestimmen zu können, werden die Signale der ersten Sensoren 11, d.h. die ersten Sensorsignale 11, zusammengeführt und gemeinsam, zum Beispiel in Abhängigkeit von ihrer Position und/oder ihrer Erfassungsrichtung und/oder weiteren Sensoreigenschaften, in der ersten Regeleinrichtung 12 verarbeitet. Die Verarbeitung oder Berechnung erfolgt beispielsweise computerbasiert. Die erste Regeleinrichtung 12 ist ausgebildet zum Verarbeiten der gelieferten ersten Sensorsignale in die ersten Aktor-Stellsignale.

Die geschieht in sogenannten Steeringmatrizen, im Detail in einer Input-Steering-Matrix und einer Output-Steering-Matrix. Die Input-Steering-Matrix setzt die ersten Sensorsignale um in Bewegungsdaten, zum Beispiel der Basismasse 2 und/oder des Tisches 1. Die Input-Steering-Matrix enthält Informationen oder eine Arbeitsanweisung, wie die einzelnen ersten Sensorsignale miteinander verarbeitet werden müssen, um eine vollständige Bewegung, insbesondere der Basismasse, oder eine störende Schwingung, vorzugsweise in allen sechs Freiheitsgraden Xt, Yt, Zt und Xr, Yr und Zr, bestimmen zu können.

Die bestimmten Komponenten Xt, Yt und Zt sowie Xr, Yr und Zr einer Schwingung werden vorliegend jeweils den Reglern 1 bis 6 zugeführt. Dort werden entsprechende Kompensationssignale, welche auch als Korrektursignale bezeichnet werden können, berechnet. Diese Kompensationssignale werden vorzugsweise mittelbar oder über die nachfolgend beschriebene Output-Steering-Matrix den ersten Aktoren 13 zugeführt zum Entgegenwirken der Schwingungen. Als ein Beispiel sind Motoren 1 bis 6 gezeigt. Diese sind der Basismasse 2 und/oder dem Tisch 1 zugeordnet. Die Schwingungen, insbesondere der Basismasse 2, werden vermindert oder kompensiert. Vorzugsweise werden sowohl die Schwingungen in den drei Freiheitsgraden der Translation Xt, Yt und Zt als auch in den drei Freiheitsgraden der Rotation Xt, Yr und Zr kompensiert.

Dabei sind die Aktoren im Allgemeinen an unterschiedlichen Positionen angebracht, um die gesamte Bewegung der Masse oder in allen Raumrichtungen zu kompensieren. Die Aktoren selbst können dabei nur in einem Freiheitsgrad oder auch in mehreren Freiheitsgraden wirksam sein. Sind Aktoren nur in einer Raumrichtung wirksam, können über eine entsprechende Ausrichtung der Aktoren im Raum und über eine vektorielle Addition der Kraftwirkungsrichtungen der Aktoren alle Raumrichtungen erfasst werden.

Um die erforderliche Kompensation zu erzielen, müssen die Wirkungen oder die Gegenbewegungen der einzelnen Aktoren aufeinander abgestimmt sein. Daher werden die ersten Kompensationssignale zusammengeführt und gemeinsam, zum Beispiel in Abhängigkeit von der Position und/oder der Wirkungsrichtung und/oder weiteren Eigenschaften der Aktoren, verarbeitet und die eigentlichen ersten Aktor-Stellsignale bestimmt.

Die geschieht nun in einer Output-Steering-Matrix. Die Output-Steering-Matrix enthält Informationen oder eine Arbeitsanweisung, in welcher Art und Weise die einzelnen ersten Kompensationssignale der Freiheitsgrade auf die einzelnen Aktoren verteilt werden müssen, um eine vollständige Bewegung oder eine störende Schwingung, insbesondere der Basismasse 2, vorzugsweise in allen sechs Freiheitsgraden Xt, Yt, Zt und Xr, Yr und Zr, kompensieren zu können. Zum Beispiel werden in der Output-Steering-Matrix die Position und/oder die Wirkungsrichtung der ersten Aktoren 13 und/oder weitere Aktoreigenschaften berücksichtigt.

Das erste Regelungssystem 10 ist zum Beispiel basierend auf wenigstens einer Sensor-Aktor-Kombination ausgewählt aus einer Gruppe bestehend aus Positionssensoreingang zu Lorentzmotorausgang (sogenannter "Proximity-Force-Loop"), Geophoneingang zu Lorentzmotorausgang (sogenannter "Velocity-Loop"), Beschleunigungseingang zu Lorentzmotorausgang (sogenannter "Acceleration-Loop"), Stagepositions und -Beschleunigungseingang auf Lorentzmotorausgang (sogenannter "Stage-Feedfoward"), Bodensensor zu Lorentzmotorausgang (sogenannter "Boden-Feedforward"). Das erste Regelungssystem 10 arbeitet auf den "logischen Achsen" der sechs Freiheitsgrade.

Erfindungsgemäß erfolgt nun nicht nur eine Verwendung der pneumatischen Isolatoren 3 in Kombination mit anderen Kraftaktoren lediglich zur Erzeugung von zusätzlichen Kompensationsskräften, wobei in der Regel die Kombination derselben auf der Aktor-Ebene stattfindet. Als Beispiel sei genannt das "Mischen" eines Lorentzmotors mit einem pneumatischen Isolator 3 und Ventil 31 als Regelungskonzept zu einem Positionsaktor. Stattdessen erfolgt erfindungsgemäß die Verwendung von pneumatischen Isolatoren 3 in Kombination mit anderen Kraftaktoren zur Erzeugung von, insbesondere zusätzlichen oder anteiligen, Kompensationskräften auf der Regelungsebene. Das Prinzip der erfindungsgemäßen Regelung basiert darauf, das pneumatische System 20 analog zur Regelung des ersten Regelungssystems 10 und optionaler weiterer Regelungssysteme über eine Input-Steering-Matrix und eine Output-Steering-Matrix zu betreiben. Diese werden auch als Sensor-Input-Steering-Matrix bzw. als Aktor-Output-Steering-Matrix bezeichnet.

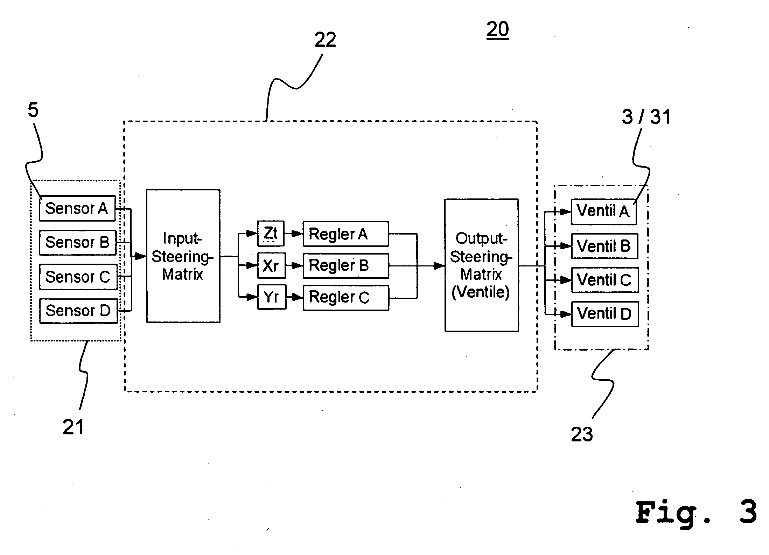

Figur 3 zeigt hierzu das pneumatische Subsystem 20 mit den Steeringmatrizen als das zweite Regelungssystem 20. Das zweite Regelsystem umfasst zweite Sensoren 21, eine zweite Regeleinrichtung 22 und zweite Aktoren 23. Das Regelungsprinzip ist analog zu dem in Figur 2 dargestellten Regelungsprinzip. Im Unterschied dazu sind die Sensoren 1 bis 6 durch die Sensoren A bis D ersetzt, welche die Positionssensoren 5 der Isolatoren 3 repräsentieren. Als weiterer Unterschied sind die Motoren 1 bis 6 ersetzt durch die steuerbaren Ventile 31 der Isolatoren 3, wobei jeweils ein Isolator zusammen mit einem Ventil 31 als zweitem Aktor 23 wirkt.

Dabei ergeben sich wegen der, insbesondere rein, vertikalen "Natur" der pneumatischen Aktoren 3 und 31 drei Freiheitsgrade, in denen diese wirksam sind: Ztranslation (Zt), Xᵣₒₜₐₜᵢₒₙ (Xt) und Yᵣₒₜₐₜᵢₒₙ (Yr). Somit ist das zweite pneumatische Regelsystem 20 wirksam in den drei vertikalen Freiheitsgraden Zt, Xr und Yr. Eine translatorische Bewegung Zt entspricht einer Bewegung entlang der Achse Z, d.h. entlang der Vertikalen. Es stellt eine Veränderung der Höhenposition der Basismasse 2 dar. Eine rotatorische Bewegung Yr und/oder Yr entspricht einer Rotation um die Achsen X und/oder Y, welche gemeinsam die Horizontale aufspannen. Es stellt eine Art "Verkippen" oder "Verdrehen" der Basismasse 2 in bzw. aus der horizontalen Ebene dar.

Die Höhenregelung des Systems wird erfindungsgemäß nicht mehr mittels Positions-(Höhen)-Sensor und zugeordnetem Isolator (sogenannte ko-lokiert Regelung) betrieben. Eine ko-lokierte Regelungsstrecke liegt vor, wenn jeweils ein Sensor und ein Aktor als Regelstrecke fungieren und in räumlicher Nähe zueinander angebracht sind. Die Höhenregelung erfolgt durch eine Input-Steering-Matrix, die Positionssensordaten in die drei Freiheitsgrade Zt, Xr und Yr umrechnet und drei unabhängige Control-Loop-Regelungen, die ihre Ausgangssignale auf die pneumatischen Aktorachsen Zt, Xr und Yr ausgeben. Für die pneumatische Höhenregelung ist dabei der Sollwert der Regelungen in Xr und Yr gleich Null, für Zt gerade die Höhe. Da nun wieder "nur" drei Regelschleifen am System arbeiten, ist keine Überbestimmtheit gegeben. Eine Regelungsinstabilität ist nicht zu erwarten.

Das erste Regelungssystem 10 arbeitet auf den Achsen der sechs Freiheitsgrade. D.h. das erste Regelungssystem 10 ist sowohl in den drei Freiheitsgraden der Translation als auch in den drei Freiheitsgraden der Rotation wirksam. Einer störenden Schwingung kann daher in jedem Freiheitsgrad der Bewegung entgegengewirkt werden. Im Idealfall wird die Schwingung kompensiert. Es ist auf einfache Weise möglich, das zweite Regelungssystem 20, d.h. das als Aktor-System wirksame pneumatische Subsystem 20, wenigstens in einer der drei oder in den drei vertikal wirksamen Freiheitsgraden Zt, Xr und Yr als Aktoren mitwirken oder sogar alleine wirken zu lassen.

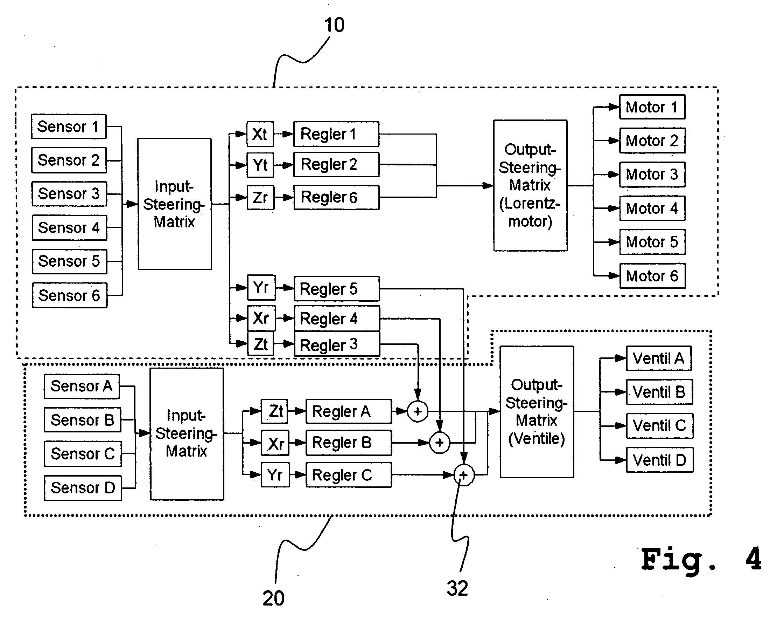

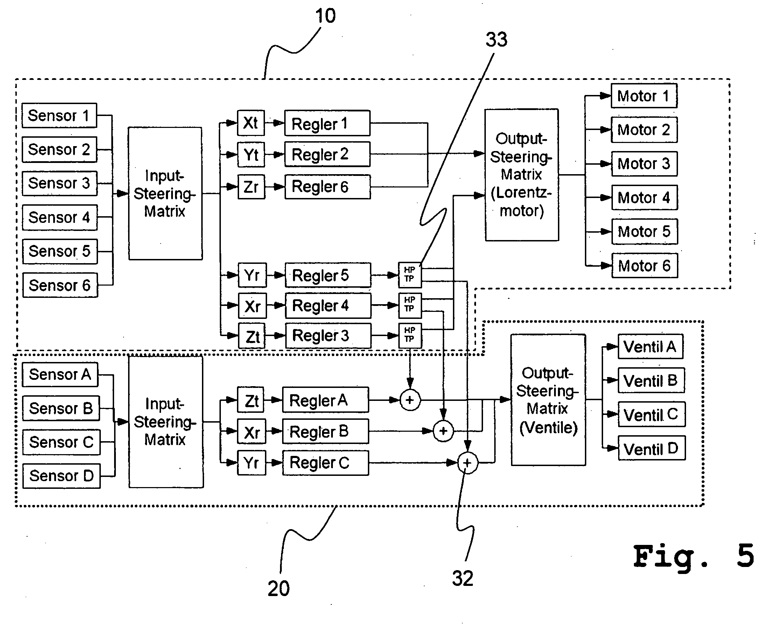

Dabei kann zu jedem einzelnen Regelungssystem, wie hier als Beispiel dem ersten Regelungssystem 10, jeweils ein Abzweig zum pneumatischen Subsystem 20 realisiert werden. Dabei werden die Ausgangssignale, d.h. die Aktor-Stellsignale der Regelungssysteme, der Freiheitsgrade Zt, Xr, Yr in, vorzugsweise einstellbaren, Anteilen aufteilt. Zu einem ersten Teil werden die Ausgangssignale der "traditionellen" Aktor-Output-Steering-Matrix des ersten Regelsystems 10, zum Beispiel zum Ansteuern der Lorentzmotoren, zugeführt. Zu einem zweiten Teil werden die Ausgangssignale der Aktor-Output-Steering-Matrix des pneumatischen Subsystems 20 zugeführt. Beispiele möglicher Ausgestaltungen dazu sind in den nachstehend beschriebenen Figuren 4 und 5 dargestellt.

Das erste Regelsystem 10 und das zweite Regelsystem 20 und optionale weitere Regelsysteme werden miteinander gekoppelt oder zusammengeführt.

Zunächst zeigt Figur 4 eine exemplarische Kopplung des in Figur 2 illustrierten ersten Regelsystems 10 mit der Regelung im pneumatischen Subsystem 20 als dem zweiten in Figur 3 illustrierten Regelsystem 20. Alle Aktor-Stellsignale der Freiheitsgrade Xr, Yr und Zt werden über die Pneumatik, d.h. das pneumatische Subsystem 20, abgewickelt.

Die Ausgangssignale aus den Reglern 3 bis 5 des ersten Regelsystems 10 werden nicht mehr als erste Aktor-Stellsignale den ersten Aktoren 13 zugeführt. Die genannten Ausgangssignale werden dem zweiten pneumatischen Regelsystem 20 zugeführt.

Über Mittel zum Zusammenführen 32 werden die Ausgangssignale der Regler 3 bis 5 den Ausgangssignalen der Regler A bis C im zweiten pneumatischen Regelsystem 20 zugeführt oder zu diesen "addiert". Die Mittel zum Zusammenführen 32 sind zum Beispiel als eine vorzugsweise digitale Verschaltung und/oder eine Computerroutine ausgeführt. Das Zusammenführen erfolgt dabei in Abhängigkeit von dem Freiheitsgrad: Zum Beispiel wird das Ausgangssignal aus dem Regler 3, welches die Information in Zt beinhaltet wird, dem Ausgangssignal des Reglers A, welches ebenso die Information in Zt beinhaltet, zugeführt. Das gleiche gilt für Xr in der Kombination aus Regler 4 mit Regler B und für Yr in der Kombination aus Regler 5 mit Regler C.

Die zusammengeführten Ausgangssignale beinhalten nun die Informationen in Xr, Yr, und Zt über die durch die zweiten Sensoren 21, hier den Positionssensoren 5, erfasste Information, hier der Positionen der Basismasse 2, sowie die durch die ersten Sensoren 11, hier den Beschleunigungs- und/oder Geschwindigkeits- und/oder Positionssensoren, erfasste Information, hier den Schwingungen der Basismasse 2 und/oder des Tisches 1. Die zusammengeführten Ausgangssignale werden der "Output-Steering-Matrix" zugeführt. Dort werden die eigentlichen zweiten Aktor-Stellsignale generiert oder berechnet. Es werden die jeweiligen zweiten Aktor-Stellsignale für die einzelnen zweiten pneumatischen Aktoren 23, 3 und 31 (A bis D) berechnet und dann den zweiten Aktoren A bis D zur Schwingungs- und/oder Positionskompensation in den Freiheitsgraden oder Achsen Xr, Yr und Zt zugeführt.

Dagegen werden die Ausgangssignale der Regler 1, 2 und 6 des ersten Regelsystems 10 für Xt, Yt und Zr über die Output-Steering-Matrix den ersten Aktoren 13 zugeführt. Die Aktor-Stellsignale der Freiheitsgrade Xt, Yt und Zr werden über das erste Regelsystem 10 "abgewickelt".

Die Aufteilung geschieht erfindungsgemäß vorzugsweise in einstellbaren Anteilen. Die Aufteilung geschieht nicht nur hinsichtlich der Amplitude. Die Aufteilung erfolgt auch, alternativ oder ergänzend, hinsichtlich der Frequenzen des Aktor-Stellsignals. Es ist dazu eine Hochpass-/Tiefpass-Filterkombination 33 vorgesehen. Über einen Hochpass (HP) und einen Tiefpass (TP) werden die Stellsignale aus dem einen, hier dem ersten, Regelkreis 10 aufgeteilt und anteilig mit den ersten Aktoren 13 des ersten Regelsystems 10, zum Beispiel Lorentzmotoren, und den zweiten Aktoren 23 des zweiten pneumatischen Regelsystems 20, hier den Isolatoren 3 mit Ventilen 31, realisiert. Vorzugsweise lässt sich so realisieren, dass tieffrequente Aktor-Stellsignale vom pneumatischen Subsystem 20 und höherfrequente dagegen von den "Standardaktoren" des ersten Regelsystems 10 verarbeitet werden. So wird der begrenzten Bandbreite der pneumatischen Regelung Rechnung getragen, die besonders bevorzugt bis etwa 30Hz oder bevorzugt bis etwa 10Hz oder bis etwa 5Hz adäquat regeln kann.

Figur 5 zeigt hierzu die exemplarische Kopplung des ersten Regelsystems 10 mit der Regelung im pneumatischen Subsystem 20 als dem zweiten Regelsystem 20 mittels der Hochpass-/Tiefpass-Filterkombination 33. Für die gleichen Bestandteile sei auf die Beschreibung zu Figur 4 verwiesen. Im Unterschied zu der in Figur 4 dargestellten Ausführungsform werden die Ausgangssignale der Regler 3 bis 5 nicht ausschließlich dem zweiten Regelsystem 20 zugeführt. Sie werden dem zweiten Regelsystem 20 nur zum Teil zugeführt. Dazu sind ein Hochpass- (HP) und ein Tiefpassfilter (TP) 33 vor dem Mittel zum Zusammenführen 32 vorgesehen. Die Ausgangssignale der Regler 3 bis 5 werden zunächst der Hochpass-/Tiefpass-Filterkombination 33 zugeführt. Ausgangssignale mit einer tieferen Frequenz werden dem zweiten Regelsystem 20 zugeführt. Ausgangssignale mit einer höheren Frequenz "verbleiben" im ersten Regelsystem 10 und werden als erste Aktor-Stellsignale den ersten Aktoren 13, hier den Motoren 1 bis 5 zugeführt. Somit werden die Ausgangssignale des ersten Regelsystems 10 als erste Aktor-Stellsignale zu einem Teil den ersten Aktoren 13 des ersten Regelsystems 10 zugeführt. Zum anderen Teil werden sie zusammen mit den Ausgangssignalen des zweiten Regelsystems 20 als zweite Aktor-Stellsignale den zweiten Aktoren 23 des zweiten Regelsystems 20 zugeführt. Jedes Regelungssystem innerhalb der Regelung, welches Kraftwirkung in einer der drei vertikal wirksamen Freiheitsgrade benötigt, kann dabei komplett oder anteilig über die HP/TP-Kombination 33 vom pneumatischen Subsystem 20 Gebrauch machen.

Für eine nicht in den Figuren dargestellte Ausführungsform des ersten Regelsystems 10 als "Stage-Feedforward" bietet es sich auch an, statt einer Frequenztrennung eine Trennung nach Eingangssignalen vorzunehmen. Bei der herkömmlichen "Stage-Feedforward"-Regelung betrifft die "Feedforward"-Kontrolle von verfahrbaren Tischen 1, den sogenannten "Stages" 1 auf der isoliert gelagerten Masse 2. Die Beschleunigungssignale und die Positionssignale der "Stage" 1 werden dabei durch eine Steuerung so verrechnet und auf die Kraftaktoren, zum Beispiel Lorentzmotoren, gegeben, dass die Auswirkungen der Kraftwirkung auf die gelagerte Masse 2 minimiert wird. Gemäß der Erfindung könnte dagegen die Pneumatik 3 und 31 als Aktor für die Positionssignale realisiert werden, während für die Beschleunigungssignale die Lorentzmotoren verbleiben. Gerade was die Positionssignale einer "Stage" 1 angeht, steckt hier großes Potenzial zur Verminderung von Abwärme durch Lorentzmotoren, wenn man die Kraftwirkung durch einen verschobenen Tisch 1 allein durch die Pneumatik auffangen würde, anstatt einen konstanten Strom durch die Lorenzmotoren zu schicken.

Es ist dem Fachmann ersichtlich, dass die beschriebenen Ausführungsformen beispielhaft zu verstehen sind. Die Erfindung ist nicht auf diese beschränkt sondern kann in vielfältiger Weise variiert werden, ohne den Geist der Erfindung zu verlassen. Merkmale einzelner Ausführungsformen und die im allgemeinen Teil der Beschreibung genannten Merkmale können jeweils untereinander als auch miteinander kombiniert werden.

### Bezugszeichenliste

- 1: Beweglicher oder fahrbarer Tisch oder "Stage"
- 2: Isolierte Masse oder Basismasse oder isolierter Tisch
- 3: Pneumatischer Isolator oder Schwingungsisolator oder Luftlager
- 4: Boden oder Unterlage
- 5: Positionssensor
- 6: Geschwindigkeitssensor oder Beschleunigungssensor in vertikaler Richtung
- 7: Geschwindigkeitssensor oder Beschleunigungssensor in horizontaler Richtung
- 8: Geschwindigkeitssensor oder Beschleunigungssensor in horizontaler Richtung
- 9: Positionssensor
- 10: Erstes Regelsystem oder Regelungssystem
- 11: Erste Sensoren
- 12: Erste Regeleinrichtung oder Regelungseinrichtung
- 13: Erste Aktoren
- 20: Zweites pneumatisches Regelsystem oder Regelungssystem
- 21: Zweite Sensoren
- 22: Zweite Regeleinrichtung oder Regelungseinrichtung
- 23: Zweite Aktoren
- 31: Ventil eines pneumatischen Isolators 3
- 32: Mittel zum Zusammenführen
- 33: Hochpass-/Tiefpass-Filterkombination
- 100: Schwingungsisolationssystem

## Patentansprüche

1. Aktives Schwingungsisolationssystem (100) umfassend
a) eine Basismasse (2) zum Lagern einer zu isolierenden Last (1),
b) pneumatische Schwingungsisolatoren (5) mit regelbaren Ventilen (31) zum Stützen der Basismasse (2) gegenüber einer Unterlage (4),
c) Positionssensoren (5) zum Liefern von vertikalen Positionssignalen der Basismasse (2),
d) ein erstes Regelsystem (10) zur Schwingungskompensation in zumindest einem Freiheitsgrad der Translation (Xt,Yt,Zt) und zumindest einem Freiheitsgrad der Rotation (Xr,Yr,Zr) mit wenigstens
d1) ersten Sensoren (6,7,8,9,11) zum Liefern von Schwingungen repräsentierenden ersten Sensorsignalen,
d2) ersten Aktoren (13) zur Schwingungskompensation, die durch Zuführen von ersten Aktor-Stellsignalen ansteuerbar sind, und
d3) einer ersten Regeleinrichtung (12), welche zum Verarbeiten der gelieferten ersten Sensorsignale in die ersten Aktor-Stellsignale ausgebildet ist, und
e) ein zweites pneumatisches Regelsystem (20) zur Schwingungskompensation in wenigstens einem von drei vertikal wirksamen Freiheitsgraden (Zt,Xr,Yr) zumindest aus
e1) den Positionssensoren (5) als zweite Sensoren (21) zum Liefern von Schwingungen repräsentierenden zweiten Sensorsignalen,
e2) den pneumatischen Schwingungsisolatoren (3) mit den Ventilen (31) als zweite Aktoren (23) zur Schwingungskompensation, die durch Zuführen von zweiten Aktor-Stellsignalen ansteuerbar sind und
e3) einer zweiten Regeleinrichtung (22), welche zum Verarbeiten der gelieferten Positionssignale in die zweiten Aktor-Stellsignale ausgebildet ist,
**dadurch kennzeichnet, dass** wenigstens von dem ersten Regelsystem (10) eine Abzweigung zu dem zweiten pneumatischen Regelsystem (20) bereitgestellt wird, so dass das erste Regelsystem (10) und das zweite pneumatische Regelsystem (20) derart gekoppelt sind, dass diese in wenigstens einem von den drei vertikal wirksamen Freiheitsgraden (Zt,Xr,Yr) zusammenwirken.

2. Aktives Schwingungsisolationssystem (100) nach dem vorstehenden Anspruch, **gekennzeichnet durch** Mittel zum Zusammenführen (32) der ersten Aktor-Stellsignale, welche in wenigstens einem der drei vertikalen Freiheitsgrade (Zt,Xr,Yr) wirksam sind, mit den in dem entsprechenden Freiheitsgrad wirksamen zweiten Aktor-Stellsignalen.

3. Aktives Schwingungsisolationssystem (100) nach einem der vorstehenden Ansprüche, **dadurch gekennzeichnet, dass** eine Hochpass-/Tiefpass-Filterkombination (33) zwischen dem ersten Regelsystem (10) und dem zweiten Regelsystem (20) angeordnet ist, so dass den zweiten Aktor-Stellsignalen die ersten Aktor-Stellsignale, welche in einem tieffrequenten Bereich liegen, zugeführt werden.

4. Verfahren zur Regelung eines mit einer Basismasse (2) zur Lagerung einer zu isolierenden Last (1) ausgestatteten aktiven Schwingungsisolationssystems (100), umfassend
- Erfassen von Schwingungen zumindest der Basismasse (2) und einer zu isolierenden Last (1) mittels einer Vielzahl von ersten Sensoren (6,7,8,9,11),
- Erfassen von vertikalen Positionen der Basismasse (2) mittels einer Vielzahl von Positionssensoren (5) als zweite Sensoren (21),
- Bereitstellen von ersten Sensorsignalen, welche die erfassten Schwingungen repräsentieren, und von zweiten Sensorsignalen, welche die erfassten vertikalen Positionen repräsentieren,
- Verarbeiten der bereitgestellten ersten und zweiten Sensorsignale zu ersten Aktor-Stellsignalen zum Ansteuern von ersten Aktoren (13) und zu zweiten Aktor-Stellsignalen zum Ansteuern von zweiten Aktoren (13), welche als pneumatische Schwingungsisolatoren (5) zum Stützen der Basismasse (2) gegenüber einer Unterlage (4) bereitgestellt werden,
- Zuführen der ersten und zweiten Aktor-Stellsignale zu den ersten Aktoren (13) und zweiten Aktoren (23) zum Entgegenwirken der Schwingungen,
wobei wenigstens von dem ersten Regelsystem (10) eine Abzweigung zu dem zweiten Regelsystem (20) bereitgestellt wird.

5. Verfahren nach dem vorstehenden Anspruch, **dadurch gekennzeichnet, dass** ein erstes Regelsystem (10) zur Schwingungskompensation in zumindest einem Freiheitsgrad der Translation (Xt,Yt,Zt) und/oder in zumindest einem Freiheitsgrad der Rotation (Xr,Yr,Zr) bereitgestellt wird.

6. Verfahren nach einem der vorstehenden Ansprüche, **dadurch gekennzeichnet, dass** das erste Regelsystem (10) zumindest durch die ersten Sensoren (6,7,8,9,11), die ersten Aktoren (13) und eine erste Regeleinrichtung (12), welche zum Verarbeiten der ersten Sensorsignale in die ersten Aktor-Stellssignale ausgebildet ist, bereitgestellt wird.

7. Verfahren nach einem der vorstehenden Ansprüche, **dadurch gekennzeichnet, dass** ein zweites Regelsystem (20) zur Schwingungskompensation in wenigstens einem von drei vertikal wirksamen Freiheitsgraden (Zt,Xr,Yr) bereitgestellt wird.

8. Verfahren nach einem der vorstehenden Ansprüche, **dadurch gekennzeichnet, dass** das zweite Regelsystem (20) zumindest durch die zweiten Sensoren (21), die zweiten Aktoren (23) und eine zweite Regeleinrichtung (22), welche zum Verarbeiten der zweiten Sensorsignale in die zweiten Aktor-Stellsignale ausgebildet ist, bereitgestellt wird.

9. Verfahren nach einem der vorstehenden Ansprüche, **dadurch gekennzeichnet, dass** die Schwingungskompensation in dem zumindest einem vertikal wirksamen Freiheitsgrad der Translation (Zt) und den zumindest zwei vertikal wirksamen Freiheitsgraden der Rotation (Xr,Yr) durch das erste Regelsystem (10) und/oder das zweite Regelsystem (20) erfolgt.

10. Verfahren nach einem der vorstehenden Ansprüche, **dadurch gekennzeichnet, dass** die ersten und/oder die zweiten Aktor-Stellsignale, die in dem Freiheitsgrad der vertikalen Translation (Zt) und/oder den zwei Freiheitsgraden der vertikalen Rotation (Xr,Yr) wirksam sind, in Abhängigkeit von einer Amplitude und/oder in Abhängigkeit von einer Frequenz der zu entgegenwirkenden Schwingungen nach Anteilen aufgeteilt wird bzw. werden.

11. Verfahren nach einem der vorstehenden Ansprüche, **dadurch gekennzeichnet, dass** den zweiten Aktor-Stellsignalen ein gegenüber den ersten Aktor-Stellsignalen tieffrequenter Bereich zur Schwingungskompensation zugeordnet wird.

12. Verfahren nach einem der vorstehenden Ansprüche, **dadurch gekennzeichnet, dass** die ersten Sensorsignale zu den ersten Aktor-Stellsignalen verarbeitet werden und/oder die ersten Aktor-Stellsignale den ersten Aktoren (13) zugeführt werden und/oder die zweiten Sensorsignale zu den zweiten Aktor-Stellsignalen verarbeitet werden und/oder die zweiten Aktor-Stellsignale den zweiten Aktoren (23) zugeführt werden.

13. Verfahren nach einem der vorstehenden Ansprüche, **dadurch gekennzeichnet, dass** die ersten Aktor-Stellsignale, welche in wenigstens einem der drei vertikalen Freiheitsgrade (Xr,Yr,Zt) wirksam sind, mit den in dem entsprechenden Freiheitsgrad (Xr,Yr,Zt) wirksamen zweiten Aktor-Stellsignalen zusammengeführt werden.

14. Verfahren nach einem der vorstehenden Ansprüche, **dadurch gekennzeichnet, dass** die ersten Aktor-Stellsignale frequenzabhängig gefiltert werden und gefilterte erste Aktor-Stellsignale in einem tieffrequenten Bereich den zweiten Aktoren (23) und gefilterte erste Aktor-Stellsignale in einem höherfrequenten Teil den ersten Aktoren (13) zugeführt werden.

## Claims

1. An active vibration isolation system (100) comprising
a) a support body (2) for bearing a load (1) which is to be isolated,
b) pneumatic vibration isolators (3) with controllable valves (31) for carrying the support body (2) with respect to a base (4),
c) position sensors (5) for providing vertical position signals of the support body (2),
d) a first regulating system (10) for vibration compensation in at least one degree of freedom in translation (Xt,Yt,Zt) and in at least one degree of freedom in rotation (Xr,Yr,Zr) with at least
d1) first sensors (6,7,8,9,11) for providing first sensor signals which represent vibrations,
d2) first actuators (13) for vibration compensation which are controllable by feeding first actuator actuation signals, and
d3) a first regulating device (12) which is intended to process the provided first sensor signals to form the first actuator actuation signals, and
e) a second pneumatic regulating system (20) for vibration compensation in at least one degree of freedom selected from three degrees of freedom (Zt,Xr,Yr) which are effective in vertical direction with at least
e1) the position sensors (5) as second sensors (21) for providing second sensor signals which represent vibrations,
e2) the pneumatic vibration isolators (3) with the valves (31) as second actuators (23) for vibration compensation which are controllable by feeding second actuator actuation signals, and
e3) a second regulating device (12) which is intended to process the provided position signals to form the second actuator actuation signals,
**characterized in that** at least one branch from the first regulating system (10) to the second pneumatic regulating system (20) is provided such that the first regulating system (10) and the second pneumatic regulating system (20) are coupled to act together in at least one degree of freedom of the three degrees of freedom (Zt,Xr,Yr) which are effective in vertical direction.

2. The active vibration isolation system (100) according to the preceding claim, **characterized by**
means (32) for combining the first actuator actuation signals which are effective in at least one degree of freedom of the three vertical degrees of freedom (Zt,Xr,Yr) with the second actuator actuation signals which are effective in the corresponding degree of freedom.

3. The active vibration isolation system (100) according to any of the preceding claims, wherein
a high-pass/low-pass-filter-combination (33) is provided between the first regulating system (10) and the second regulating system (20), so that the first actuator actuation signals of a low frequency interval are fed to the second actuator actuation signals.

4. A method for regulating an active vibration isolation system (100) which is equipped with a support body (2) for bearing a load (1) which is to be isolated, comprising
- Detecting at least vibrations of the support body (2) and a load (1) which is to be isolated by means of a plurality of first sensors (6,7,8,9,11),
- Detecting vertical positions of the support body (2) by means of a plurality of position sensors (5) as second sensors (21),
- Providing first sensor signals, which represent the detected vibrations, and second sensor signals, which represent the detected vertical positions,
- Processing the provided first and second sensor signals to form first actuator actuation signals for controlling first actuators (13) and to form second actuator actuation signals for controlling second actuators (23) which are provided as pneumatic vibration isolators (3) which carry the support body (2) with respect to a base (4)
- Feeding the first and second actuator actuation signals to the first actuators (13) and to the second actuators (23) to counteract the vibrations,
wherein at least one branch from the first regulating system (10) to the second regulating system (20) is provided..

5. The method according to the preceding claim, wherein
a first regulating system (10) for vibration compensation in at least one degree of freedom in translation (Xt,Yt,Zt) and in at least one degree of freedom in rotation (Xr,Yr,Zr) is provided.

6. The method according to any of the preceding claims, wherein the first regulating system (10) is provided by at least the first sensors (6,7,8,9,11), the first actuators (13) and a first regulating device (12) which is intended to process the provided first sensor signals to form the first actuator actuation signals.

7. The method according to any of the preceding claims, wherein a second regulating system (20) for vibration compensation in at least one degree of freedom selected from three degrees of freedom (Zt,Xr,Yr) which are effective in vertical direction is provided.

8. The method according to any of the preceding claims, wherein the second regulating system (20) is provided by at least the second sensors (21), the second actuators (23) and a second regulating device (12) which is intended to process the second signals to form the second actuator actuation signals.

9. The method according to any of the preceding claims, wherein the vibration compensation is performed in the at least one vertically acting degree of freedom in translation (Zt) and in the at least two vertically acting degrees of freedom in rotation (Xr,Yr) by the first regulating system (10) and/or the second regulating system (20).

10. The method according to any of the preceding claims, wherein the first and/or the second actuator actuation signals, which are effective in the one degree of freedom in vertical translation (Zt) and/or in the two degrees of freedom in vertical rotation (Xr,Yr), are distributed dependent on an amplitude of the vibration to be counteracted and/or dependent on a frequency of the vibration to be counteracted.

11. The method according to any of the preceding claims, wherein, compared with the first actuator actuation signals, a low-frequency interval is assigned to the second actuator actuation signals.

12. The method according to any of the preceding claims, wherein the first sensor signals are processed to form the first actuator actuation signals and/or
the first actuator actuation signals are fed to the first actuators (13) and/or
the second sensor signals are processed to form the second actuator actuation signals and/or
the second actuator actuation signals are fed to the second actuators (13).

13. The method according to any of the preceding claims, wherein the first actuator actuation signals which are effective in at least one degree of freedom of the three vertical degrees of freedom (Xr,Yr,Zt) are combined with the second actuator actuation signals which are effective (act) in the corresponding degree of freedom (Xr,Yr,Zt).

14. The method according to any of the preceding claims, wherein the first actuator actuation signals are frequency-dependent filtered and filtered first actuator actuation signals of a low-frequent interval are fed to the second actuators (23) and filtered first actuator actuation signals of a higher-frequent interval are fed to the first actuators (13).

## Revendications

1. Système d'isolation active contre les vibrations (100) comprenant
a) une masse de base (2) permettant de supporter une charge (1) à isoler,
b) des isolateurs pneumatiques de vibrations (5) comportant des soupapes (31) réglables permettant de soutenir la masse de basse (2) par rapport à une surface d'appui (4),
c) des capteurs de position (5) permettant de délivrer des signaux de position verticale de la masse de base (2),
d) un premier système de régulation (10) permettant de compenser les vibrations dans au moins un degré de liberté de la translation (Xt, Yt, Zt) et au moins un degré de liberté de la rotation (Xr, Yr, Zr) comprenant au moins
d1) des premiers capteurs (6, 7, 8, 9, 11) permettant de délivrer des premiers signaux de capteur représentant les vibrations,
d2) des premiers actionneurs (13) permettant de compenser les vibrations, qui peuvent être commandés par amenée des premiers signaux de commande d'actionneur, et
d3) un premier dispositif de régulation (12), lequel est conçu pour convertir les premiers signaux de capteurs délivrés en premiers signaux de commande d'actionneur, et
e) un deuxième système de régulation pneumatique (20) permettant de compenser les vibrations dans au moins un des trois degrés de liberté (Zt, Xr, Yr) actifs verticalement composé
e1) des capteurs de position (5) utilisés comme deuxièmes capteurs (21) pour délivrer des deuxièmes signaux de capteur représentant des vibrations,
e2) d'isolateurs pneumatiques de vibrations (3) comprenant les soupapes utilisés comme deuxièmes actionneurs (23) pour compenser les vibrations, lesquels peuvent être commandés par amenée des deuxièmes signaux de commande d'actionneur et
e3) un deuxième dispositif de régulation (22), lequel est conçu pour convertir les signaux de position délivrés en deuxièmes signaux de commande d'actionneur,
**caractérisé en ce qu'**une dérivation vers le deuxième système de régulation pneumatique (20) est fournie au moins par le premier système de régulation (10), de sorte que le premier système de régulation (10) et le deuxième système de régulation pneumatique (20) sont couplés de telle manière que ces derniers coopèrent dans au moins un parmi les trois degrés de liberté (Zt, Xr, Yr) actifs verticalement.

2. Système d'isolation active contre les vibrations (100) selon l'une quelconque des revendications précédentes, **caractérisé par** des moyens permettant de réunir (32) les premiers signaux de commande d'actionneur, lesquels sont actifs dans au moins un des trois degrés verticaux de liberté (Zt, Xr, Yr), et les deuxièmes signaux de commande d'actionneur actif dans le degré de liberté correspondant.

3. Système d'isolation active contre les vibrations (100) selon l'une quelconque des revendications précédentes, **caractérisé en ce qu'**une combinaison de filtres passe-haut et de filtres passe-bas (33) est disposée entre le premier système de régulation (10) et le deuxième système de régulation (20), de sorte que les premiers signaux de commande d'actionneur, lesquels se situent dans une gamme des basses fréquences, sont amenés aux deuxièmes signaux de commande d'actionneur.

4. Procédé de régulation d'un système d'isolation active contre les vibrations (100) équipé d'une masse de base (2) permettant de soutenir une charge (1) à isoler, comprenant
- la détection des vibrations d'au moins la masse de base (2) et d'une charge (1) à isoler au moyen d'une pluralité de premiers capteurs (6, 7, 8, 9, 11),
- la détection de positions verticales de la masse de base (2) au moyen d'une pluralité de capteurs de position (5) utilisés comme deuxièmes capteurs (21),
- la fourniture de premiers signaux de capteur, lesquels représentent les vibrations détectées, et de deuxièmes signaux de capteurs, lesquels représentent les positions verticales détectées,
- la conversion des premiers et des deuxièmes signaux de capteur fournis en premiers signaux de commande d'actionneur permettant de commander les premiers actionneurs (13) et en deuxièmes signaux de commande d'actionneur permettant de commander les deuxièmes actionneurs (13), lesquels sont conçus sous la forme d'isolateurs de vibration pneumatiques (5) permettant de soutenir la masse de basse (2) par rapport à une surface d'appui (4),
- l'amenée des premiers et des deuxièmes signaux de commande d'actionneur aux premiers actionneurs (13) et aux deuxièmes actionneurs (23) pour contrecarrer les vibrations, une dérivation vers le deuxième système de régulation (20) étant fournie au moins par le premier système de régulation (10).

5. Procédé selon l'une quelconque des revendications précédentes, **caractérisé en ce qu'**un premier système de régulation (10) est conçu pour compenser les vibrations dans au moins un degré de liberté de la translation (Xt, Yt, Zt) et/ou dans au moins un degré de liberté de la rotation (Xr, Yr, Zr).

6. Procédé selon l'une quelconque des revendications précédentes, **caractérisé en ce que** le premier signal de régulation (10) est fourni au moins par les premiers capteurs (6, 7, 8, 9, 11), les premiers actionneurs (13) et un premier dispositif de régulation (12), lequel est conçu pour convertir les premiers signaux de capteurs en premiers signaux de commande d'actionneur.

7. Procédé selon l'une quelconque des revendications précédentes, **caractérisé en ce qu'**un deuxième système de régulation (20) est conçu pour compenser les vibrations dans au moins un des trois degrés de liberté (Zt, Xr, Yr) actifs verticalement.

8. Procédé selon l'une quelconque des revendications précédentes, **caractérisé en ce que** le deuxième système de régulation (20) est fourni au moins par les deuxième capteurs (21), les deuxièmes actionneurs (23) et un deuxième dispositif de régulation (22), lequel est conçu pour convertir les deuxièmes signaux de capteur en deuxièmes signaux de commande d'actionneur.

9. Procédé selon l'une quelconque des revendications précédentes, **caractérisé en ce que** la compensation des vibrations est réalisée dans le ou les degrés de liberté actifs verticalement de la translation (Zt) et les deux degrés de liberté ou plus actifs verticalement de la rotation (Xr, Yr) par le premier système de régulation (10) et/ou le deuxième système de régulation (20).

10. Procédé selon l'une quelconque des revendications précédentes, **caractérisé en ce que** les premiers et/ou les deuxièmes signaux de commande d'actionneur, qui sont actifs dans le degré de liberté de la translation verticale (Zt) et/ou les deux degrés de liberté de la rotation verticale (Xr, Yr), sont divisés en fractions en fonction d'une amplitude et/ou en fonction d'une fréquence des vibrations à contrecarrer.

11. Procédé selon l'une quelconque des revendications précédentes, **caractérisé en ce qu'**une gamme des basses fréquences par rapport aux premiers signaux de commande d'actionneur permettant de compenser les vibrations est associée aux deuxièmes signaux de commande d'actionneur.

12. Procédé selon l'une quelconque des revendications précédentes, **caractérisé en ce que** les premiers signaux de capteur sont convertis en premiers signaux de commande d'actionneur et/ou les premiers signaux de commande d'actionneur sont amenés aux premiers actionneurs (13) et/ou les deuxièmes signaux de capteur sont convertis en deuxièmes signaux de commande d'actionneur et/ou les deuxièmes signaux de commande d'actionneur sont amenés aux deuxièmes actionneurs (23).

13. Procédé selon l'une quelconque des revendications précédentes, **caractérisé en ce que** les premiers signaux de commande d'actionneur, lesquels sont actifs dans au moins un des trois degrés de liberté verticaux (Xr, Yr, Zt), sont réunis aux deuxièmes signaux de commande d'actionneur actifs dans le degré de liberté (Xr, Yr, Zt) correspondant.

14. Procédé selon l'une quelconque des revendications précédentes, **caractérisé en ce que** les premiers signaux de commande d'actionneur sont filtrés en fonction de la fréquence et les premiers signaux de commande d'actionneur filtrés sont amenés dans une gamme des fréquences basses aux deuxièmes actionneurs (23) et les premiers signaux de commande d'actionneur filtrés sont amenés dans une partie des fréquences hautes aux premiers actionneurs (13).
